# EUROPÄISCHE PATENTSCHRIFT

(11) **EP 2 213 955 B1**
(45) Veröffentlichungstag und Bekanntmachung des Hinweises auf die Patenterteilung: **19.06.2019**
(21) Anmeldenummer: 10000785.5
(22) Anmeldetag: 27.01.2010
(51) Int. Cl.: F24F 11/00, F24F 3/044, F24F 7/00

(54) **Verfahren zur Belüftung und/oder Klimatisierung von mindestens einem Raum sowie entsprechende Vorrichtung**
Method for ventilating and/or air conditioning at least one area and corresponding device
Procédé d'aération et/ou de climatisation d'au moins une pièce, ainsi que dispositif correspondant

(30) Priorität: 02.02.2009 DE 102009008198
(43) Veröffentlichungstag der Anmeldung: 04.08.2010
(73) Patentinhaber: LTG Aktiengesellschaft, 70435 Stuttgart (DE)
(72) Erfinder: Schaal, Gerd, Dr.-Ing., 70567 Stuttgart (DE)
(74) Vertreter: Clarenbach, Carl-Philipp

(56) Entgegenhaltungen:
- WO-A1-90/00705
- FR-A1- 2 733 663
- US-A- 3 376 916
- US-A- 3 720 258
- US-A- 4 203 485
- US-A- 4 243 174
- US-A1- 2009 007 978

## Beschreibung

Die Erfindung betrifft ein Verfahren zur Belüftung und/oder Klimatisierung von mindestens einem Raum oder dergleichen.

Es ist bekannt, einen Raum durch Einbringen von pulsierender Luft zu belüften. Durch die pulsierend ausströmende Luft erfolgt eine bessere Durchmischung der eingebrachten Luft mit der Raumluft. Durch das Unterbrechen der zuströmenden Luft strömt Raumluft durch eine Sogwirkung des entsprechenden Luftimpulses nach, bevor der nächste Luftimpuls austritt. Die bekannte Pulsation wird durch aufeinanderfolgendes Ein- und Ausschalten eines Ventilators bewirkt. Dies hat zur Folge, dass durch den Nachlaufeffekt aufgrund der trägen Masse des Förderrads des Ventilators die Impulse nicht sehr deutlich ausgeprägt sind, wobei eine hohe elektrische und mechanische Beanspruchung des Ventilators durch das ständige Ein- und Ausschalten eine Lebensdauerverkürzung auftritt.

Aus der Offenlegungsschrift FR 2 733 663 A1 geht bereits ein Verfahren zur Belüftung und/oder Klimatisierung von mindestens einem Raum hervor, bei dem ein kontinuierlich zugeführter Luftstrom mit mindestens einem Parameter beaufschlagt wird, sodass die resultierende Luft an mindestens zwei im Wesentlichen rückkupplungsfrei voneinander beabstandeten Stellen wechselweise in den Raum eingebracht wird. Aus der Offenlegungsschrift US 4,243,174 A geht weiterhin eine Kontrolleinrichtung für elektrisch betätigbare Dämpfer in Heiz- und Belüftungsleitungen, um den Luftfluss zu einer Vielzahl von Räumen zum Zwecke der Energieeinsparung automatisiert zu öffnen und zu schließen, hervor. Weitere Verfahren zur Klimatisierung und/oder Belüftung von Räumen sind aus den Offenlegungsschriften US 2009/007978 A1, WO 90/00705 A1, US 4,203,485 A, US 3,376,916 A und US 3,720,258 A bereits bekannt.

Der Erfindung liegt die Aufgabe zugrunde, ein Verfahren zur Belüftung und/oder Klimatisierung von mindestens einem Raum oder dergleichen anzugeben, bei dem eine sehr gute Durchmischung von zugeführter Luft und Raumluft erfolgt. Insbesondere soll eine hohe Beanspruchung von elektrischen und/oder mechanischen Einrichtungen vermieden werden. Überdies soll eine einhergehende Geräuschbelastung, die stets mit strömender Luft verbunden ist, sehr gering gehalten werden. Dies gilt auch für die Geräuschentwicklung entsprechender technischer Einrichtungen.

Diese Aufgabe wird mit den Merkmalen des Anspruchs 1 insbesondere dadurch gelöst, dass bei dem Verfahren mindestens ein kontinuierlich zugeführter Luftstrom mit Parametern beaufschlagt wird, sodass die resultierende Luft an mindestens zwei im Wesentlichen rückwirkungsfrei voneinander beabstandeten Stellen wechselweise in den Raum eingebracht wird oder an jeweils mindestens einer Stelle wechselweise in mindestens zwei Räume eingebracht wird und an mindestens einer Stelle mit wechselnder Lufttemperatur in den Raum oder die Räume eingebracht wird. Da die Luftzuführung kontinuierlich erfolgt, treten keine überhöhten Strömungsgeräusche oder Vorrichtungsgeräusche auf. Gleichwohl tritt die Luft als Luftimpulse in den Raum ein und zwar an mindestens zwei voneinander beabstandeten Stellen. Die beiden Stellen werden wechselweise bestromt, d.h., der kontinuierlich zugeführte Luftstrom wird wechselweise den beiden voneinander beabstandeten Stellen des Raumes zugeführt, sodass bezüglich des gesamten Raumes im Wesentlichen eine Kontinuität der eingebrachten Luftströmung gegeben ist, durch die zu unterschiedlichen Stellen wechselweise erfolgende Luftzuleitung jedoch Luftimpulse in den Raum eintreten. Diese in den Raum eingebrachten Luftimpulse haben im Wesentlichen keine Wechselwirkung zueinander, da die Einbringstellen hinreichend weit beabstandet zueinander liegen. Während aus einer der Stellen ein Luftstrom austritt, tritt aus der anderen Stelle keine Luft aus. Dies erfolgt im stetigen Wechsel, wobei sich durch die entsprechend weite Beabstandung der Einbringstellen die Luftimpulse nicht im Sinne einer kontinuierlichen Strömung in einer entsprechend kleinen Raumzone überlagern. Alternativ ist es möglich, dass die resultierende Luft an jeweils mindestens einer Stelle wechselweise in mindestens zwei Räume eingebracht wird. Die mindestens zwei Räume weisen somit jeweils mindestens eine Stelle auf, an der Luft austritt. Durch den in den mindestens zwei Räumen wechselweise erfolgenden Luftaustritt werden in jeden Raum Luftimpulse eingebracht, die ebenfalls zu den entsprechenden vorstehend bereits genannten Vorteilen führen. Zusätzlich wird die resultierende Luft an mindestens einer Stelle mit wechselnder Lufttemperatur in den Raum eingebracht. Der hierdurch erfolgende Temperaturunterschied der eingebrachten Luft führt ebenfalls zu einer verbesserten Durchmischung. Unerwünschte stationäre Raumluftwalzen und/oder hohe Raumluftgeschwindigkeiten lassen sich aufgrund mindestens einer der drei zuvor erwähnten Maßnahmen verhindern. Es ist auch möglich, drei der erwähnten Maßnahmen miteinander zu kombinieren, sodass zum Beispiel die resultierende Luft an jeweils mindestens einer Stelle wechselweise in mindestens zwei Räume eingebracht wird und dabei in mindestens beiden Räumen, in ihrer Lufttemperatur variieren, sodass beispielsweise zwei aufeinanderfolgende Luftimpulse eines Raumes Luft mit unterschiedlicher Temperatur aufweisen. Es sind auch Pulsreihen denkbar, bei denen mehrere Luftimpulse die gleiche Lufttemperatur und danach mehrere Luftimpulse auftreten, die gegenüber der vorherigen Lufttemperatur eine Temperaturdifferenz aufweisen. Ferner lässt sich der Pulsvolumenstrom jedes Einzelimpulses und/oder das Zeitintervall der Wirksamkeit des Luftimpulses und/oder die Anzahl der Impulse gleicher Art variieren. Der pulsierende Luftstrom mit gleichzeitig pulsierendem Temperaturniveau ermöglicht eine ausgezeichnete Durchmischung und/oder Temperaturschichtung der Luft im Raum. Da die Dichte kälterer Luft höher ist als die Dichte wärmerer Luft, wird aufgrund der Temperaturvariation bei kälteren Luftimpulsen eine größere Sinkgeschwindigkeit der Luft im Raum als bei wärmeren Impulsen erreicht. Auch dies ist förderlich für die Durchmischung der eingebrachten Luft mit der Raumluft. Die Erfindung ist nicht auf einen Raum oder auf zwei Räume beschränkt, sondern kann auch bei mehr als zwei Räumen angewendet werden.

Erfindungsgemäß ist vorgesehen, dass einer der erwähnten Parameter eine Luftwegumschaltung ist. Die kontinuierlich zugeführte Luft wird daher entlang mehrerer Luftwege laufend umgeschaltet, um aus entsprechend vielen voneinander im Wesentlichen rückwirkungsfrei beabstandeten Stellen in den Raum oder die Räume einzutreten. Durch das wechselweise oder nach einem vorgebbaren Muster erfolgende Umschalten werden Luftimpulse gebildet.

Erfindungsgemäß ist ein weiterer der erwähnten Parameter eine Temperaturbeeinflussung der Luft. Hierdurch können quasi Temperaturimpulse gesetzt werden, d.h., selbst dann, wenn die Luft kontinuierlich in den Raum einströmt, jedoch Strömungsabschnitte mit unterschiedlichen Temperaturen vorliegen, ergeben sich die Vorteile einer besseren Durchmischung.

Die erwähnten Parameter können vorzugsweise periodisch und/oder disperiodisch angewendet werden. So ist es beispielsweise möglich die Luftwegumschaltung periodisch oder disperiodisch umzuschalten oder eine periodische und/oder disperiodische Temperaturbeeinflussung vorzunehmen.

Erfindungsgemäß ist vorgesehen, dass die Parameter für eine sprunghafte Wirkung angewendet werden. Die eingebrachten Luftimpulse werden demzufolge sprunghaft verändert. Entsprechendes gilt für die Temperaturbeeinflussung.

Eine Weiterbildung der Erfindung sieht vor, dass durch die Beaufschlagung mit dem mindestens einen Parameter Luft strömungsgepulst in den Raum oder die Räume eingebracht wird. Hierauf wurde vorstehend schon näher eingegangen. Entsprechend wurde bereits beschrieben, dass durch die Beaufschlagung mit dem mindestens einen Parameter Luft vorzugsweise wärmegepulst in den Raum eingebracht wird. Die Kombination der Strömungspulsung und der Wärmepulsung ist besonders vorteilhaft.

Grundsätzlich kann für den Luftstrom jede beliebige Luft und/oder jedes beliebige Luftgemisch verwendet werden. Insbesondere kann vorgesehen sein, dass als Luftstrom ein Außenluftstrom und/oder ein Raumluftstrom verwendet wird/werden.

Das Verfahren wird nach einer Weiterbildung der Erfindung als zentrales oder dezentrales Belüftungs- und/oder Klimatisierungsverfahren durchgeführt. Bei einer zentralen Vorgehensweise wird die Luft, die zur Belüftung und/oder Klimatisierung des Raumes und/oder der Räume vorgesehen ist, in einem zentralen Bereich, beispielsweise einer Klimazentrale eines Gebäudes, entsprechend aufbereitet und dann über Luftleitungen oder dergleichen dem Raum und/oder den Räumen zugeführt. Bei einem dezentralen Vorgehen wird die Luft raumnah oder im Raum aufbereitet, beispielsweise wird an der Fassade des Raumes Außenluft angesaugt, die dann strömungsgepulst und/oder wärmegepulst in den Raum und/oder die Räume gelangt.

Die Erfindung betrifft ferner eine Vorrichtung zur Belüftung und/oder Klimatisierung von mindestens einem Raum oder dergleichen gemäß dem Anspruch 5.

Diese Vorrichtung eignet sich insbesondere zur Durchführung des vorstehend erwähnten Verfahrens.

Ferner ist es vorteilhaft, wenn die Luftwegumschaltvorrichtung mindestens zwei Luftleitwege aufweist, die durch Umsteuermittel wechselseitig von Luft durchströmt werden.

Insbesondere kann vorgesehen sein, dass die Temperaturbeeinflussungseinrichtung mindestens zwei Luftleitwege aufweist, die durch Umsteuerelemente wechselseitig von Luft durchströmt werden, wobei in mindestens einem der Luftleitwege ein Wärmetauscher angeordnet ist.

Die erwähnten Umsteuermittel und/oder die erwähnten Umsteuerelemente weisen mindestens eine Schwenkklappe und/oder mindestens eine Drehklappe auf. Eine Schwenkklappe verschwenkt vorwärts und führt anschließend eine Rückwärtsbewegung aus. Eine Drehklappe dreht sich pro Umdrehung um 360°. Letztere führt vorzugsweise zur Erzeugung von sinusartigen Impulsen.

Schließlich ist die Vorrichtung als zentrale oder dezentrale Vorrichtung ausgebildet.

Die Zeichnungen veranschaulichen die Erfindung anhand von Ausführungsbeispielen, und zwar zeigt:
- Figur 1: eine schematische Ansicht einer Vorrichtung zur Belüftung und/oder Klimatisierung eines Raumes oder mehrerer Räume,
- Figur 2: eine schematische Ansicht einer Gesamtanlage mit Vorrichtung entsprechend Figur 1, jedoch als Luftzentrale und Luftbehandlung eines Raumes,
- Figur 3: eine schematische Ansicht einer Gesamtanlage mit Vorrichtung entsprechend Figur 1, jedoch als Luftzentrale und Luftbehandlung mehrerer Räume, insbesondere eines Gebäudes.

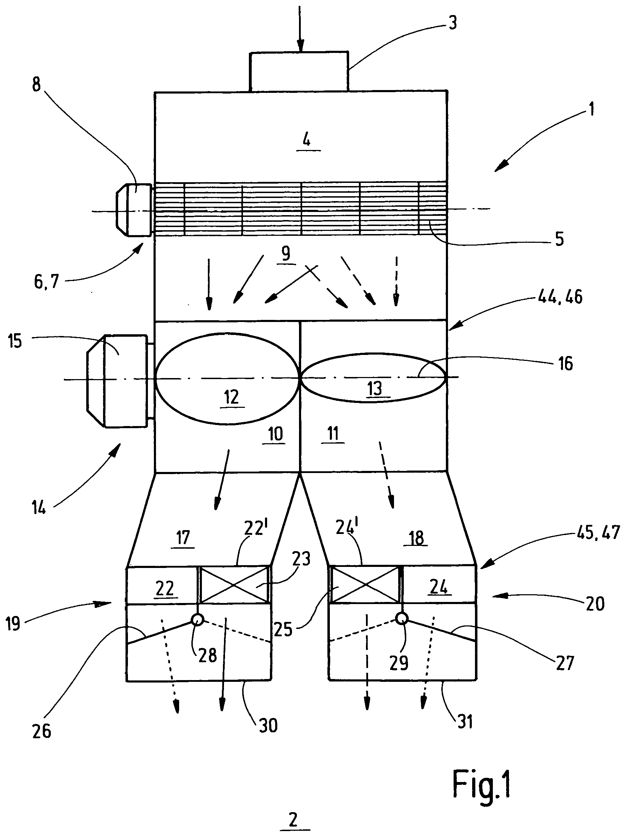

Die Figur 1 zeigt eine Vorrichtung 1 zur Belüftung und Klimatisierung eines Raums 2 oder mehrerer Räume 2, welcher/welche nicht näher dargestellt ist/sind. Die Vorrichtung 1 weist einen Luftansaugstutzen 3 auf, dem eine Luftkammer 4 folgt, an die sich ein Laufrad 5 eines Ventilators 6 anschließt, der als Querstromventilator 7 ausgebildet ist. Alternativ sind jedoch auch andere Ventilator-Bauarten möglich. Der Querstromventilator 7 weist einen elektrischen Antriebsmotor 8 auf. An den Querstromventilator 7 schließt sich eine Luftkammer 9 an, in die zwei Luftleitwege 10 und 11 münden. In den Luftleitwegen 10 und 11 befinden sich Drehklappen 12 und 13 einer Luftwegumschaltvorrichtung 14, die einen Drehantrieb 15 besitzt, der um eine Drehachse 16 die Drehklappen 12 und 13 rotieren kann. Die beiden Drehklappen 12 und 13, die Umsteuermittel 46 darstellen, liegen um 90° winkelversetzt zueinander derart, dass wenn beispielsweise die Drehklappe 12 den Luftleitweg 10 vollständig verschließt, die Drehklappe 13 den Luftleitweg 11 vollständig freigibt. Im Zuge der Rotation der Drehklappen 12 und 13 ergeben sich entsprechende Zwischenstellungen. An den Luftleitweg 10 schließt sich ein Luftkanal 17 und an den Luftleitweg 11 ein Luftkanal 18 an. An den Luftkanal 17 schließt sich eine Temperaturbeeinflussungseinrichtung 19 und an den Luftkanal 18 eine Temperaturbeeinflussungseinrichtung 20 an. Ein Teilquerschnitt des Luftkanals 17 führt zu einem Luftleitweg 22 und ein weiterer Teilquerschnitt zu einem Wärmetauscher 23 in einem Luftleitweg 22'. Entsprechendes gilt für den Luftkanal 18, sodass dort Verbindung zu einem Luftleitweg 24 und einem Wärmetauscher 25 in einem Luftleitweg 24' besteht. Die Anordnung kann vorzugsweise derart getroffen sein, dass der Druckverlust des Wärmetauschers 23 beziehungsweise des Wärmetauschers 25 dem Druckverlust des Luftleitwegs 22 beziehungsweise 24 entspricht, um gleiche Volumenströme durch die verschiedenen Elemente zu erhalten. Die Temperaturbeeinflussungseinrichtungen 19 und 20 weisen jeweils eine Schwenkklappe 26 beziehungsweise 27 auf, die Umsteuerelemente 47 bilden und mittels eines nicht dargestellten Antriebs um Drehachsen 28 beziehungsweise 29 verschwenken können, wobei eine maximale Schwenkstellung mit durchgezeichneter Linie und eine weitere maximale Schwenkstellung mit gestrichelter Linie angedeutet ist. Im Betrieb ergeben sich entsprechende Zwischenstellungen zwischen diesen beiden Endstellungen. Es ist aus der Figur 1 ersichtlich, dass die Schwenkklappen 26 und 27 in einer Endstellung die Luftleitwege 22 und 24 verschließen und in der anderen Endstellung die Wärmetauscher 23 und 25 verschließen. Stromabwärts der Temperaturbeeinflussungseinrichtungen 19 und 20 liegen Luftauslässe 30 und 31, die innerhalb des Raumes 2 voneinander beabstandet liegen, wobei der Abstand mindestens so groß gewählt ist, dass im Wesentlichen Rückwirkungsfreiheit besteht, das heißt, ein aus einem Luftauslass austretender Luftstrom überlagert sich nicht mit einem Luftstrom der aus dem anderen Luftauslass austritt, sondern die beiden Luftströme zeigen im Raum jeweils separate Wirkung, wie nachstehend noch näher beschrieben wird. Alternativ ist es auch möglich, dass der Luftauslass 30 in einem Raum 2 und der Luftauslass 31 in einem anderen Raum 2 liegt, sodass in den einen Raum 2 unterschiedlich temperaturbehandelte Luftimpulse und in den anderen Raum 2 ebenfalls unterschiedlich temperaturbehandelte Luftimpulse eintreten.

Die Vorrichtung 1 der Figur 1 arbeitet in Betrieb folgendermaßen. Der Querstromventilator 7 läuft mit konstanter Drehzahl, befindet sich somit im kontinuierlichen Betrieb mit der Folge, dass er kontinuierlich Luft (insbesondere Außenluft und/oder Raumluft) am Luftansaugstutzen 3 ansaugt, die in die Luftkammer 4 und von dort in die Luftkammer 9 gelangt. Der Drehantrieb 15 befindet sich in Betrieb, sodass die beiden versetzt zueinander angeordneten Drehklappen 12 und 13 die Luftleitwege 10 und 11 wechselseitig öffnen beziehungsweise schließen, mit der Folge, dass die vom Querstromventilator 7 gelieferte Luft zum Beispiel zunächst in den Luftleitweg 10 und anschließend in den Luftleitweg 11 und dann wieder in den Luftleitweg 10 gelangt und so weiter. Hierdurch werden in den Luftkanälen 17 und 18 Strömungsimpulse erzeugt, die zeitlich zueinander alternieren. In Abhängigkeit der Schwenkstellungen der Schwencklappen 26 und 27 gelangen die Strömungsimpulse in den Luftkanälen 17 und 18 entweder über die Luftleitwege 22 und 24 direkt zu den Luftauslässen 30 und 31 oder über die Wärmetauscher 23 und 25 zu den Luftauslässen 30 und 31. Im Zuge des Verschwenkens der Schwenkklappen 26 und 27 liegen entsprechende Zwischenstellungen vor. Aus den Luftauslässen 30 und 31 treten somit Luftimpulse aus, die temperaturunbehandelt beziehungsweise temperaturbehandelt sind. Die Temperaturbehandlung erfolgt mittels der Wärmetauscher 23 und 25, wobei diese die Luft kühlen und/oder erwärmen können.

Die Folge ist, dass aufgrund der gepulst in den Raum 2 oder die Räume 2 eingebrachten Luft, die überdies Temperaturwechsel aufweist, eine sehr gute Durchmischung der eingebrachten Luft mit der im Raum 2 oder den Räumen 2 vorhandenen Raumluft erfolgt, wodurch sich unerwünschte stationäre Raumluftwalzen und hohe Raumluftgeschwindigkeiten vermeiden lassen und dort vorhandene Personen sich nicht in einer dauerhaften Luftströmung befinden, die als unangenehm empfunden wird. Die Luftimpulse erzeugen ein wesentlich angenehmeres Raumklima.

Im vorstehenden Ausführungsbeispiel und in den nachfolgenden Ausführungsbeispielen stellt die Luftumschaltung mit Luftwegumschaltvorrichtung 14 ein Parameter 44 und die Temperaturbeeinflussung mittels der Temperaturbeeinflussungsvorrichtung 19, 20 ein Parameter 45 dar.

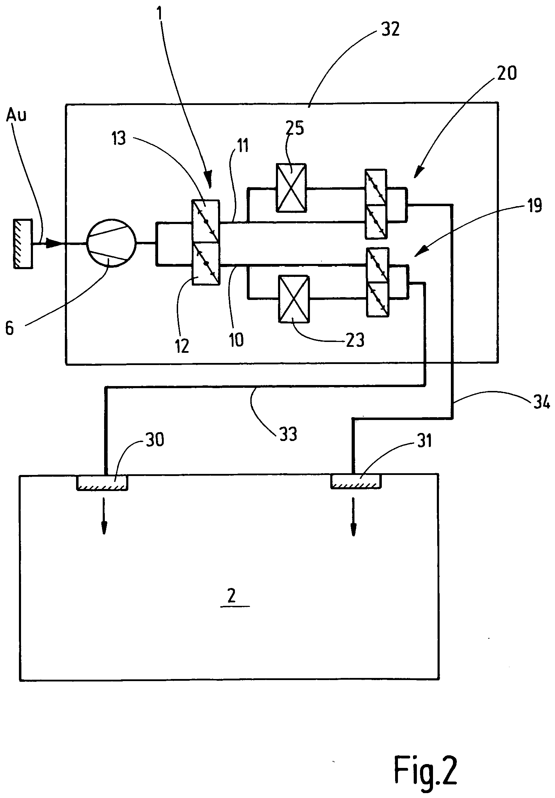

Die Figur 2 zeigt in einem Gebäude oder dergleichen eine Luftzentrale 32, in der sich eine Vorrichtung 1 gemäß Figur 1 befindet, die schematisch dargestellt ist und die mittels des Ventilators 6 zum Beispiel Außenluft Au durch einen Lufteinlass ansaugen kann. Die Temperaturbeeinflussungseinrichtungen 19 und 20 stehen über Luftkanäle 33 und 34 mit Luftauslässen 30 und 31 eines Raums 2 in Verbindung. Die Luftauslässe 30 und 31 weisen einen im Wesentlichen rückwirkungsfreien Abstand zueinander auf. Im Betrieb der Anlage gemäß Figur 2 ergibt sich eine entsprechende Belüftung und Klimatisierung des Raums 2, so wie dies bereits bei dem Ausführungsbeispiel der Figur 1 beschrieben wurde.

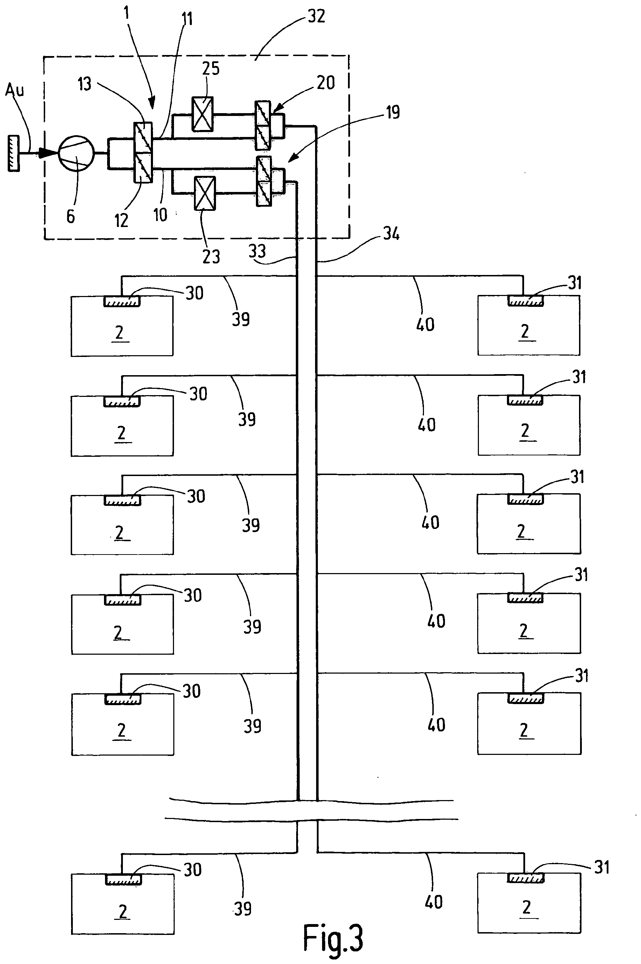

Die Figur 3 zeigt ein Ausführungsbeispiel, das im Wesentlichen dem Ausführungsbeispiel der Figur 2 entspricht, sodass insoweit auf diese und die zugehörige Beschreibung verwiesen wird. Unterschiedlich ist jedoch, dass mittels der Vorrichtung 1 nicht ein Raum 2, sondern dass mehrere Räume 2 versorgt werden, wobei jeder der Räume 2 im dargestellten Ausführungsbeispiel nur einen Luftauslass 30 beziehungsweise 31 aufweist. Natürlich ist es denkbar, dass pro Raum mehrere Luftauslässe 30 beziehungsweise 31 vorgesehen sein können. Demzufolge würden nicht - wie in der Figur 3 dargestellt - jeweils eine Luftleitung 39 beziehungsweise 40 von den Luftkanälen 33 beziehungsweise 34 abgehen, sondern mehrere derartige Luftleitungen beziehungsweise ist es auch möglich, dass sich die Luftleitungen 39 und/oder 40 aufteilen, um dann zu mehreren Luftauslässen eines der Räume 2 zu führen.

Im Betrieb des Ausführungsbeispiels der Figur 3 werden dem jeweiligen Luftauslass 30 beziehungsweise 31 temperaturgepulste Strömungsimpulse zugeführt, wobei die Strömungspulsung in den Luftkanälen 33 und 34 alterniert. Die Temperaturpulsung hinsichtlich der Temperaturbeeinflussungseinrichtungen 19 und 20 kann synchron zueinander oder aber auch asynchron erfolgen. Ferner ist es möglich, dass die Strömungsimpulse zu den Temperaturimpulsen in einem bestimmten Verhältnis hinsichtlich Periode, Aktivzeiten, Auszeiten und so weiter liegen oder dass sich freie Verhältnisse einstellen.

Bei den Ausführungsbeispielen, bei denen sowohl eine Strömungspulsung als auch eine Wärmepulsung vorliegt, können Strömungspulsfrequenz und Temperaturpulsfrequenz aufeinander abgestimmt sein, also in einem festen Verhältnis zueinander stehen oder in einem sich gewünscht veränderbaren Verhältnis. Auch können Strömungspulsfrequenz und /oder Temperaturpulsfrequenz über die Zeit variieren. Es ist auch möglich, dass zwischen diesen beiden Frequenzen kein bestimmtes Verhältnis besteht, sondern sich beliebig ergibt und sich gegebenenfalls über die Zeit verändert. Auch Kombinationen der verschiedenen vorstehend erwähnten Frequenzen sind denkbar.

Aufgrund der erfindungsgemäßen Strömungspulse und der beabstandeten Einbringstellen in den Raum oder der in verschiedenen Räumen liegenden Einbringstellen, erfolgt dort eine sehr gute Vermischung mit der Raumluft. Entsprechendes gilt für das Einbringen der Luft mit wechselnder Lufttemperatur, also den Wärmeimpulsen. Bei einer Kombination beider Pulsarten wird eine besonders gute Durchmischung erzielt. Die Luftimpulse werden von einer sich im Raum aufhaltenden Person als wesentlich angenehmer empfunden als eine dauerhafte Luftströmung. Die Vorrichtung zur Belüftung und/oder Klimatisierung kann als zentrale Einrichtung mit einer Klimazentrale gemäß dem Ausführungsbeispiel der Figur 2 oder 3 ausgestaltet sein. Es ist jedoch auch denkbar, dass ein oder mehrere dezentrale Lüftungsgeräte und/oder Klimageräte vorliegen, die in dem/den oder nahe dem/den zu belüftenden beziehungsweise zu klimatisierenden Raum/Räumen angeordnet sind. In einem solchen Fall ist es möglich, die Vorrichtung als Boden-, Brüstungs-, Wand- oder Deckengerät auszubilden. Auch eine unsichtbare Unterbringung, beispielsweise in einer Zwischendecke oder in einem Doppelboden, in einer Wand oder in einer Fassade oder in einem benachbarten Raum, beispielsweise in einem Flur, oder als Deckenkoffer, ist denkbar. Die Luftauslässe können sich direkt am Gerät befinden oder mit Luftleitungen verbunden sein, die zu Luftauslässen führen. Die erwähnten Drehklappen besitzen einen Winkelversatz zueinander, der vorzugsweise 90° beträgt. Es sind jedoch auch andere Versatzwinkel denkbar, insbesondere 60°. Insbesondere ist vorgesehen, dass die Frequenz des Pulsens des Volumenstroms und/oder des Pulsens bezüglich der Temperatur wählbar, auch wählbar veränderbar, vorgebbar ist. Gegebenenfalls können bei den Ausführungsbeispielen der Figuren 1 bis 3 Schalldämpfer und/oder Luftfilter vorgesehen werden.

Vorstehend wurde davon ausgegangen, dass sich Drehklappen vorzugsweise kontinuierlich in einer Richtung drehen. Es ist jedoch auch möglich, dass sich diese Klappen hin- und herbewegen, beispielsweise um einen schwellenden Luftimpuls zu erhalten oder vollständig schließende Klappen einzusetzen. Auch lässt sich die Frequenz des Drehens und/oder der Hin- und Herbewegung in gewünschter Weise vorgeben und diese Frequenz muss nicht über die Zeit konstant sein. Kontinuierlicher Betrieb ist - wie bereits erwähnt - jedoch auch denkbar.

Bei den vorstehend erwähnten Ausführungsbeispielen sind Drehklappen für die Strömungsimpulse und Schwenkklappen für die Temperaturimpulse eingesetzt. Natürlich ist es auch möglich, Schwenkklappen für die Strömungsimpulse und Drehklappen für die Temperaturimpulse einzusetzen oder für die beiden unterschiedlichen Pulsarten gleichartige Klappen, also nur Drehklappen oder nur Schwenkklappen zu verwenden.

Ein Vergleich des Ausführungsbeispiels der Figur 1 mit den Ausführungsbeispielen der Figuren 2 und 3 zeigt, dass es frei wählbar ist, ob die Wärmetauscher 23 und 25 stromaufwärts oder stromabwärts zu den entsprechenden Klappen 26 und 27 oder auch dementsprechenden Drehklappen liegen.

Der in den Raum einströmende Volumenstrom kann im Wesentlichen konstant gehalten werden, wenn bei der Temperaturbeeinflussungseinrichtung der Druckverlust des Wärmetauschers in dem Kanal ohne Wärmetauscher konstruktiv erzeugt wird, beispielsweise durch einen entsprechend gewählten Querschnitt. Durch das wechselweise Austreten von Pulsen aus beabstandet zueinander liegenden Luftauslässen entfalten die einzelnen Pulse jeweils für sich Wirkung, wobei jedoch der in den Raum eintretende Volumenstrom aufgrund der Wechselfolge insgesamt gesehen konstant ist.

Sowohl bei der dezentralen Vorrichtung als auch bei der zentralen Anordnung (Klimazentrale) können Ventilator 6, Luftwegumschaltvorrichtung 14 und Temperaturbeeinflussungseinrichtung 19, 20 räumlich getrennt voneinander angeordnet sein. So ist es beispielsweise denkbar, dass sich der Ventilator 6 mit der Luftwegumschaltvorrichtung 14 in der Klimazentrale oder einem vorzugsweise dezentralen Gerätegehäuse befinden und dass die Temperaturbeeinflussungseinrichtung 19, 20 im Luftauslass 30, 31 angeordnet ist oder - strömungstechnisch gesehen - kurz vor dem Luftauslass 30, 31 positioniert ist. Statt der vorstehend erwähnten Zuordnung der Temperaturbeeinflussungseinrichtung 19, 20 zum Luftauslass 30, 31 ist auch eine Zuordnung zu mehreren Luftauslässen beziehungsweise zu einer Luftleitung mit mehreren Luftauslässen möglich. Denkbar ist auch, dass sich der Ventilator 6 und die Temperaturbeeinflussungseinrichtung 19, 20 in der Klimazentrale oder einem vorzugsweise dezentralen Gerätegehäuse befinden und dass die Luftwegumschaltvorrichtung 14 einem Luftauslass oder mehreren Luftauslässen oder einer Luftleitung oder mehreren Luftleitungen zugeordnet ist. Die vorstehend erwähnte räumliche Trennung und Anordnung (Reihenfolge) bezieht sich auf alle drei Geräte - Ventilator, Luftwegumschaltvorrichtung und Temperaturbeeinflussungseinrichtung. Es sind beliebige Trennungen und Anordnungen sowie Kombinationen denkbar.

## Patentansprüche

1. Verfahren zur Belüftung und/oder Klimatisierung von mindestens einem Raum oder dergleichen, bei dem mindestens ein kontinuierlich zugeführter Luftstrom mit Parametern (44,45) beaufschlagt wird, wobei ein Parameter (44) eine laufend erfolgende Luftwegumschaltung ist und ein weiterer Parameter (45) eine Temperaturbeeinflussung der Luft ist, sodass die resultierende Luft
- an mindestens zwei im Wesentlichen rückwirkungsfrei voneinander beabstandeten Stellen wechselweise in den Raum (2) oder an jeweils mindestens einer Stelle wechselweise in mindestens zwei Räume (2)
- und an mindestens einer Stelle mit wechselnder Lufttemperatur in den Raum (2) oder die Räume (2) eingebracht wird,
- wobei die Parameter (44,45) für eine sprunghafte Wirkung derart angewendet werden, dass durch die Beaufschlagung mit dem einen Parameter (44) Luft strömungsgepulst in den Raum (2) oder die Räume (2) eingebracht wird und dass durch die Beaufschlagung mit dem anderen Parameter (45) Luft temperaturgepulst in den Raum (2) oder die Räume (2) eingebracht wird, wodurch Strömungsabschnitte mit unterschiedlichen Temperaturen vorliegen, die zu einer besseren Durchmischung führen.

2. Verfahren nach Anspruch 1, **dadurch gekennzeichnet, dass** der Parameter (44,45) periodisch und/oder disperiodisch angewendet wird.

3. Verfahren nach einem der vorhergehenden Ansprüche, **dadurch gekennzeichnet, dass** als Luftstrom ein Außenluftstrom (Au) und/oder ein Raumluftstrom (Ra) verwendet wird.

4. Verfahren nach einem der vorhergehenden Ansprüche, **dadurch gekennzeichnet, dass** es als zentrales oder dezentrales Belüftungs- und/oder Klimatisierungsverfahren durchgeführt wird.

5. Vorrichtung zur Belüftung und/oder Klimatisierung von mindestens einem Raum oder dergleichen, insbesondere zur Durchführung des Verfahrens nach einem oder mehreren der vorhergehenden Ansprüche, mit mindestens einem mindestens einen Luftstrom erzeugenden, kontinuierlich arbeitenden Ventilator (6), dem eine Luftwegumschaltvorrichtung (14) und mindestens eine Temperaturbeeinflussungseinrichtung (19,20) nachgeschaltet ist,
- mit denen Luft von mindestens zwei im Wesentlichen rückwirkungsfrei voneinander beabstandet angeordneten Luftauslässen (30,31) wechselweise in den Raum (2) oder
- mit denen Luft von jeweils mindestens einem Luftauslass (30,31) wechselweise in mindestens zwei Räume (2) eingebracht wird und
- mit denen Luft mit wechselnder Lufttemperatur von mindestens einem Luftauslass (30,31) in den Raum (2) oder die Räume (2) eingebracht wird, und
- wobei die Luftwegumschaltungsvorrichtung (14) und die mindestens eine Temperaturbeeinflussungseinrichtung (19,20) für eine sprunghafte Wirkung derart arbeiten, dass durch die Beaufschlagung mit der Luftwegumschaltungsvorrichtung (14) Luft strömungsgepulst in den Raum (2) oder die Räume (2) eingebracht wird und dass durch die Beaufschlagung mit der Temperaturbeeinflussungseinrichtung (19,20) Luft temperaturgepulst in den Raum (2) oder die Räume (2) eingebracht wird, wodurch Strömungsabschnitte mit unterschiedlichen Temperaturen vorliegen, die zu einer besseren Durchmischung führen.

6. Vorrichtung nach Anspruch 5, **dadurch gekennzeichnet, dass** die Luftwegumschaltvorrichtung (14) mindestens zwei Luftleitwege (10,11) aufweist, die durch Umsteuermittel (46) wechselseitig von Luft durchströmt werden.

7. Vorrichtung nach einem der vorhergehenden Ansprüche, **dadurch gekennzeichnet, dass** die Temperaturbeeinflussungseinrichtung (19,20) mindestens zwei Luftleitwege (22,22',24,24') aufweist, die durch Umsteuerelemente (47) wechselseitig von Luft durchströmt werden, wobei in mindestens einem der Luftleitwege (22,22',24,24') ein Wärmetauscher (23,25) angeordnet ist.

8. Vorrichtung nach einem der vorhergehenden Ansprüche, **dadurch gekennzeichnet, dass** die Umsteuermittel (46) und/oder die Umsteuerelemente (47) mindestens eine Schwenkklappe (26,27) und/oder mindestens eine Drehklappe (12,13) aufweisen.

9. Vorrichtung nach einem der vorhergehenden Ansprüche **gekennzeichnet durch** die Ausbildung als zentrale oder dezentrale Vorrichtung.

## Claims

1. A method for ventilating and/or air conditioning at least one room or the like, wherein at least one continuously supplied air stream is acted upon by parameters (44, 45), wherein one parameter (44) is a continuously occurring air path switchover and a further parameter (45) is a temperature manipulation of the air, so that the resulting air is introduced
- alternately at at least two locations which are spaced apart from one another in a substantially reactionless manner into the room (2) or alternately into at least two rooms (2) at at least one location in each room
- and is introduced into the room (2) or the rooms (2) at at least one location with changing air temperature,
- the parameters (44, 45) for a sudden effect being applied in such a way that air is introduced into the room (2) or the rooms (2) in a flow pulsed manner by the application of the one parameter (44), and in that air is introduced into the room (2) or the rooms (2) in a temperature pulsed manner by the application of the other parameter (45), resulting in flow sections with different temperatures which lead to better mixing.

2. Method according to claim 1, **characterized in that** the parameter (44, 45) is applied periodically and/or non-periodically.

3. Method according to one of the preceding claims, **characterized in that** an outside air stream (Au) and/or a room air stream (Ra) is used as the air stream.

4. Method according to one of the preceding claims, **characterized in that** it is carried out as a centralised or decentralised ventilation and/or air-conditioning method.

5. Device for ventilating and/or air-conditioning at least one room or the like, in particular for carrying out the method according to one or more of the preceding claims, having at least one continuously operating fan (6) which generates at least one air stream, and which is followed by an air path switching device (14) and at least one temperature influencing device (19, 20),
- with which air from at least two air outlets (30, 31) which are arranged at a distance from one another in a reactionless manner, is alternately introduced into the room (2), and
- with which air is alternately introduced into at least two rooms (2) from at least one air outlet (30, 31) in each case, and
- with which air of varying air temperature is introduced into the room (2) or the rooms (2) from at least one air outlet (30, 31), and
- wherein the air path switching device (14) and the at least one temperature influencing device (19, 20) for a sudden effect operate in such a way that air is introduced into the room (2) or the rooms (2) in a flow pulsed manner by being acted upon by the air path switching device (14), and that air is introduced into the room (2) or the rooms (2) in a temperature-pulsed manner by being acted upon by the temperature influencing device (19, 20), whereby flow sections with different temperatures are present, which lead to better mixing.

6. Device according to claim 5, **characterized in that** the air path switching device (14) has at least two air ducts (10, 11) through which air flows alternately by means of reversing means (46).

7. Device according to one of the preceding claims, **characterized in that** the temperature influencing device (19, 20) comprises at least two air ducts (22, 22', 24, 24') through which air flows alternately by means of reversing elements (47), a heat exchanger (23, 25) being arranged in at least one of the air ducts (22, 22', 24, 24').

8. Device according to one of the preceding claims, **characterized in that** the reversing means (46) and/or the reversing elements (47) comprise at least one pivoting flap (26, 27) and/or at least one rotary flap (12, 13).

9. Device according to one of the preceding claims, **characterized by** the configuration as a central or decentralised device.

## Revendications

1. Procédé de ventilation et/ou de climatisation d'au moins une pièce ou similaire, dans lequel au moins un écoulement d'air alimenté en continu est influencé par des paramètres (44, 45), un paramètre (44) étant un changement de trajectoire d'air continu et un autre paramètre (45) étant une influence sur la température de l'air, de sorte que l'air obtenu
- est introduite alternativement dans la pièce (2) en au moins deux endroits espacés l'un de l'autre de manière pratiquement sans réaction ou alternativement dans au moins deux pièces (2) en au moins un endroit chacun
- et est introduite dans la pièce (2) ou les pièces (2) en au moins un endroit avec une température de l'air variable,
- les paramètres (44, 45) pour un effet soudain étant appliqués de telle sorte que de l'air est introduit dans la pièce (2) ou les pièces (2) dans un écoulement pulsé par l'application d'un paramètre (44), et en ce que de l'air est introduit dans la pièce (2) ou les pièces (2) à une température pulsée par l'application de l'autre paramètre (45), ce qui donne lieu à des sections d'écoulement avec différentes températures qui mènent à un meilleur mélange.

2. Procédé selon la revendication 1, **caractérisé en ce que** le paramètre (44, 45) est appliqué périodiquement et/ou non périodiquement.

3. Procédé selon l'une des revendications précédentes, **caractérisé en ce qu'**un écoulement d'air extérieur (Au) et/ou un écoulement d'air ambiant (Ra) est utilisé comme écoulement d'air.

4. Procédé selon l'une des revendications précédentes, **caractérisé en ce qu'**il est réalisé comme procédé de ventilation et/ou de climatisation centralisée ou décentralisée.

5. Dispositif de ventilation et/ou de climatisation d'au moins une pièce ou similaire, notamment pour la mise en oeuvre du procédé selon une ou plusieurs des revendications précédentes, comportant au moins un ventilateur (6) fonctionnant en continu qui génère au moins un écoulement d'air et qui est suivi par un dispositif de changement de trajectoire d'air (14) et au moins un dispositif d'influence de température (19, 20),
- avec lesquels de l'air provenant d'au moins deux sorties d'air (30, 31) disposées à distance l'une de l'autre de manière pratiquement sans réaction est alternativement introduit dans la pièce (2) ou
- avec lesquels de l'air provenant respectivement d'au moins une sortie d'air (30, 31) est alternativement introduit dans au moins deux pièces (2), et
- avec lesquels de l'air à température d'air changeant est introduit dans la pièce (2) ou les pièces (2) par au moins une sortie d'air (30, 31), et
- dans lequel le dispositif de changement de trajectoire d'air (14) et le au moins un dispositif d'influence de température (19, 20) pour un effet soudain fonctionnent de telle sorte que de l'air est introduit dans la pièce (2) ou les pièces (2) dans un écoulement pulsé en étant influencé par le dispositif de changement de trajectoire d'air (14), et que de l'air est introduit dans la pièce (2) ou les pièces (2) à une température pulsée en étant influencé par le dispositif d'influence de température (19, 20), ce qui donne lieu à des sections d'écoulement avec différentes températures qui mènent à un meilleur mélange.

6. Dispositif selon la revendication 5, **caractérisé en ce que** le dispositif de changement de trajectoire d'air (14) comporte au moins deux voies d'acheminement d'air (10, 11) à travers lesquelles l'air circule alternativement par des moyens d'inversion (46).

7. Dispositif selon l'une des revendications précédentes, **caractérisé en ce que** le dispositif d'influence de la température (19, 20) comporte au moins deux voies d'acheminement d'air (22, 22', 24, 24') à travers lesquelles l'air circule alternativement par des éléments d'inversion (47), un échangeur thermique (23, 25) étant disposé dans au moins un des voies d'acheminement d'air (22, 22', 24, 24').

8. Dispositif selon l'une des revendications précédentes, **caractérisé en ce que** les moyens d'inversion (46) et/ou les éléments d'inversion (47) comportent au moins un volet pivotant (26, 27) et/ou au moins un volet rotatif (12, 13).

9. Dispositif selon l'une des revendications précédentes **caractérisé par** la formation en tant que dispositif central ou décentralisé.
